# EUROPEAN PATENT APPLICATION

(11) **EP 2 879 285 A1**
(43) Date of publication of application: **03.06.2015**
(21) Application number: 13194648.5
(22) Date of filing: 27.11.2013
(51) Int. Cl.: H02M 1/36, H02M 3/335, H02M 1/00

(54) **Start-up circuit for a pulse-width modulator**

(71) Applicant: Refusol GmbH, 72555 Metzingen (DE)
(72) Inventor: Mallik, Amitabha, 560016 Bangalore (IN)
(74) Representative: Daub, Thomas

(57) **Abstract**

The invention is related to start-up circuit for providing a supply voltage for a pulse-width modulator of a switch-mode power supply, comprising a feed-in node (12) provided to be electrically connected with an external power source, comprising a linear voltage-regulator (13) for converting an input voltage into a supply voltage of the pulse-width modulator.

The start-up circuit comprises a switching unit (14) arranged between the feed-in node (12) and the linear voltage-regulator (13), the switching unit (14) being provided to define a maximum input voltage applied to the linear voltage-regulator (13).

## Description

### Field of the invention

The invention relates to a start-up circuit for a pulse-width modulator of a switch-mode power supply.

### Background of the invention

A switch-mode power supply, comprising a feed-in node provided to be electrically connected with an external power source, comprising a linear voltage-regulator for converting an input voltage into a supply voltage of a pulse-width modulator has already been disclosed in prior art.

The objective of the invention is to provide a start-up circuit which is applicable for a wide input voltage range.

### Summary of the invention

This objective is achieved by a start-up circuit for providing a supply voltage for a pulse-width modulator of a switch-mode power supply, comprising a switching unit arranged between the feed-in node and the linear voltage-regulator, the switching unit being provided to define a maximum input voltage applied to the linear voltage-regulator.

By this means, a start-up circuit which is applicable for a wide input voltage range and/or for power sources with varying voltage values can be provided. Furthermore, a start-up circuit can be provided featuring a low leakage current, in particular at high input voltage values, particularly above 800 VDC. In this context a "switch-mode power supply" is to be understood as a converter provided in particular to feed the power of an external power source, preferably a solar power panel, into a power grid or into low-voltage electric loads. Preferably, an input voltage of the power supply is in the range of 230 VDC to 1100 VDC and an output voltage has a value of about 24 VDC. A "linear voltage-regulator" is to be understood as an electronic device apt to provide a stable output voltage which is in particular at least partially independent from an input voltage level applied to the linear voltage-regulator. Preferably, the linear voltage-regulator has a control contact provided to adjust the value of the output voltage.

Preferably, the switching unit comprises an actively switchable device comprising an output contact and a control contact. By this means, a very low leakage current can be achieved, in particular when the start-up circuit is switched off. Hence, a very efficient start-up circuit can be achieved. An "actively switchable device" should be understood as a device featuring a variable resistance, the device having a control contact provided to adjust the resistance of the device, whereby a current through the device can be shut off. In this context to "shut off" a current is intended to mean to reduce the current to an OFF-level of less than 1 %, preferably less than 0.5 %, and most preferably less than 0.1 % compared to an ON-level.

In an advantageous embodiment of the invention the switching unit comprises at least one Zener diode connected to the control contact of the switchable device, the Zener diode being provided to trigger the switchable device. By this means standard electronic devices can be used, and a cost-efficient start-up circuit can be achieved. In this context a "Zener diode" is to be understood as an electronic device featuring a variable resistance and a blocking voltage level, above which a current running through the device increases at least by a factor of 100, preferably by a factor of 1000, and most preferably by a factor of 2000.

Preferably, the switching unit comprises a ground connection which the Zener diode is connected to. In this way, a start-up circuit with a straightforward design can be achieved. In this context a "ground connection" is to be understood as a reference potential level of the circuitry of the switch-mode power supply.

In a further aspect of the invention, the switching unit comprises at least one further Zener diode connecting the ground connection to the Zener diode which is connected to the control contact of the switchable device. By this means, standard devices can be used to build the start-up circuit, and a reliable and cost-effective start-up circuit can be provided. In an advantageous embodiment of the invention the switchable device is implemented as a depletion-mode field effect transistor. By this means a very small leakage current limited to 100 pA, favourably to 60 pA, preferably to 40 pA, can be achieved, in particular for high input voltages. In this context, a "depletion-mode field effect transistor" should be understood as a transistor being in an ON-state when a gate-source voltage is above a threshold value of about -3.5 VDC.

Preferably, the switching unit comprises a resistor connecting the output contact of the switchable device to the Zener diode which is connected to the control contact of the switchable device, the resistor being provided to limit a current through the Zener diode. Thus, a switching behaviour of the start-up circuit can be optimized, and a very small leakage current can be achieved.

According to the invention, the maximum input voltage applied to the linear voltage-regulator is below 480 VDC. By this means an input voltage specification of the linear voltage-regulator can be met, and a standard device for the linear voltage-regulator can be used, whereby a highly reliable start-up circuit can be provided.

In an advantageous embodiment of the invention the start-up circuit comprises an additional Zener diode provided to define a minimum input voltage applied to the linear voltage-regulator. By this means, requirements according to a specification of the linear voltage-regulator can be met. Preferably, the additional Zener diode has a blocking voltage value of at least 35 VDC. By this means, an optimal minimum input voltage for the linear voltage-regulator can be achieved and a highly efficient power-supply having very small internal losses can be provided. It is conceivable that, depending on the characteristics of the linear voltage-regulator, the blocking voltage of the additional Zener diode has a value greater than 35 VDC, for instance 90 VDC, or 100 VDC.

In an advantageous embodiment, the feed-in node is provided to be connected to a solar power panel. Thus, a start-up circuit for a switch-mode power supply can be provided, which is adapted to convert the power of a solar power panel for low-voltage electric loads.

In an advantageous embodiment of the invention a switch-mode power supply has a start-up circuit according to the invention. By this means, a highly efficient switch-mode power-supply can be provided.

### Drawing

Within the scope of this specification it is envisaged that each and every aspect, embodiment, example, feature and alternative set out in the preceding paragraphs, in the 11 claims and/or in the following description and drawing may be taken independently or in any combination thereof. Features described in association with one embodiment of the invention are equally applicable to other embodiments, except where there is incompatibility of features.

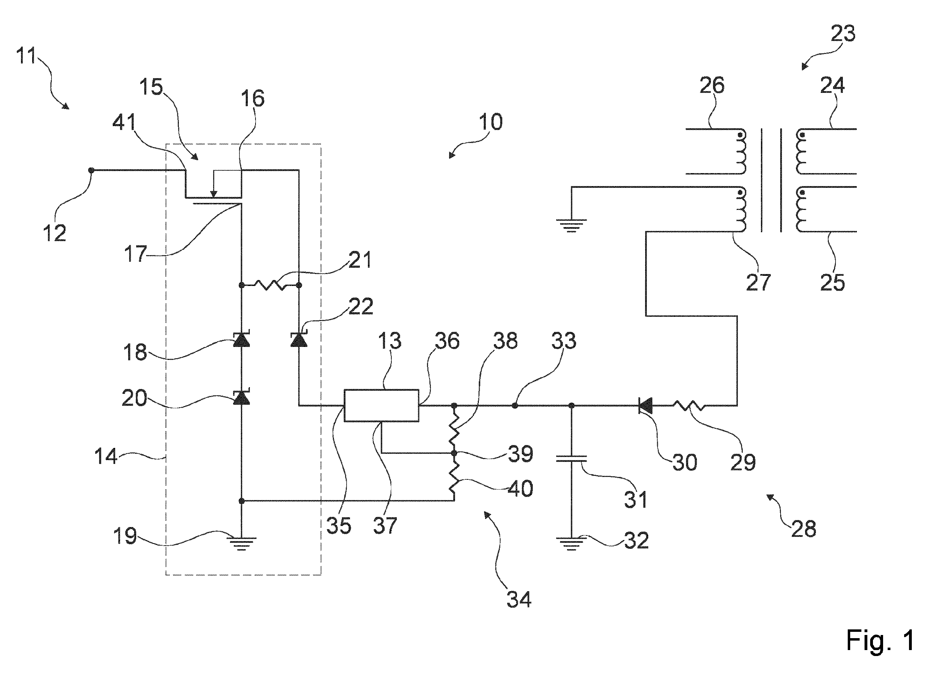

The present invention will now be described, by way of example only, with reference to the accompanying drawing:

The only figure shows a schematic diagram of a switch-mode power supply circuit.

### Description of an embodiment of the invention

The figure displays a switch-mode power supply 11 with a transfer unit 23, a pulse-width modulator and a start-up circuit 10. The switch-mode power supply 11 is implemented as a flyback converter. The transfer unit 23 comprises two secondary windings 24, 25, one main primary winding 26 and one auxiliary winding 27. The pulse-width modulator, which is not shown in the figure, is provided for producing a switching signal for the main primary winding 26. The auxiliary winding 27 is electrically connected to a power-supply circuit 28 for the pulse-width modulator. The power-supply circuit 28 comprises a resistor 29, a diode 30, a capacitor 31, a ground connection 32 and an output node 33 electrically connected to the pulse-width modulator. The capacitor 31 is arranged between the ground connection 32 and the output node 33.

The start-up circuit 10 is intended for providing a supply voltage for the pulse-width modulator in a start-up phase wherein a voltage provided by the auxiliary winding 27 is below an operating voltage of the pulse-width modulator. The start-up circuit 10 is electrically connected to the pulse-width modulator at the output node 33 of the power-supply circuit 28.

The start-up circuit 10 comprises a ground connection 19, a linear voltage-regulator 13 for converting an input voltage into a supply voltage of the pulse-width modulator and a potential divider 34. The supply voltage has a value of about 20 VDC. The linear voltage-regulator 13 is implemented as a high-input-voltage, adjustable, three-terminal linear regulator. The linear voltage-regulator 13 has an input contact 35, an output contact 36 and a control contact 37. The output contact 36 is electrically connected to the output node 33 of the power-supply circuit 28. The potential divider 34 comprises a first resistor 38, an intermediate node 39 and a second resistor 40. The resistors 38, 40 of the potential divider 34 are electrically connected in series between the output contact 36 of the linear voltage-regulator 13 and the ground connection 19. The intermediate node 39 is arranged between the resistors 38, 40 and is electrically connected to the control contact 37 of the linear voltage-regulator 13. The potential divider 34 is provided for adjusting the value of the supply voltage at the output contact 36 of the linear voltage-regulator 13.

The start-up circuit 10 comprises a feed-in node 12 provided to be electrically connected to an external power source. Furthermore, the start-up circuit 10 comprises a switching unit 14 arranged between the feed-in node 12 and the linear voltage-regulator 13. The switching unit 14 is provided to define a maximum input voltage which is applied to the linear voltage-regulator 13.

The switching unit 14 comprises an actively switchable device 15 having an input contact 41, an output contact 16 and a control contact 17. Furthermore, the switching unit 14 comprises a Zener diode 18 electrically connected to the control contact 17 of the switchable device 15, the Zener diode 18 being provided to trigger the switchable device 15. Furthermore, the switching unit 14 comprises the ground connection 19 which the Zener diode 18 is electrically connected to. The Zener diode 18 is arranged between the control contact 17 of the switchable device 15 and the ground connection 19. The switching unit 14 comprises another Zener diode 20 arranged between the ground connection 19 and the Zener diode 18 which is electrically connected to the control contact 17 of the switchable device 15. The Zener diodes 18, 20 form a pair and are connected in series between the control contact 17 of the switchable device 15 and the ground connection 19. It is also conceivable that the second Zener diode 20 is omitted, depending on the blocking voltage level of the first Zener diode 18.

The switchable device 15 is implemented as a depletion-mode field effect transistor and has a drain, a source and gate. The drain is electrically connected to the feed-in node 12 via the input contact 41 of the switchable device 15. The output contact 16 of the switchable device 15 is electrically connected to the source, and the control contact 17 of the switchable device 15 is electrically connected to the gate. The switching unit 14 comprises a resistor 21 electrically connecting the output contact 16 of the switchable device 15 to the Zener diode 18 which is electrically connected to the control contact 17 of the switchable device 15. The resistor 21 is provided to limit a current through the Zener diode 18. The resistor 21 is arranged between the output contact 16 and the control contact 17 of the switchable device 15 and has a value of 100 kΩ.

The main primary winding 26 and the start-up circuit 10 are both electrically connected to the feed-in node 12. In a start-up phase of the external power source a voltage applied to the feed-in node 12 increases. A gate-source voltage of the switchable device 15 is zero, and the switchable device 15, being a depletion-mode transistor, is in an ON-state.

The start-up circuit 10 comprises an additional Zener diode 22 provided to define a minimum input voltage for the linear voltage-regulator 13. The additional Zener diode 22 is arranged between the output contact 16 of the switchable device 15 and the input contact 35 of the linear voltage-regulator 13. The voltage at the output-contact 16 of the switchable device 15 is applied to an input contact of the additional Zener diode 22. The additional Zener diode 22 has a blocking voltage level of 100 VDC. The blocking voltage level of the additional Zener diode 22 is adjusted to the specifications of the linear voltage-regulator 13. In this embodiment it is conceivable that the blocking voltage is in a range from 35 VDC up to 480 VDC, assuming that the remaining elements of the start-up circuit 10 are adapted accordingly. When the voltage at the feed-in node 12 and at the output contact 16 of the switchable device 15 reaches the value of the blocking voltage level, the Zener diode 22 opens, and the voltage is applied to the linear voltage-regulator 13. The linear voltage-regulator 13 transforms the input voltage into the supply voltage for the pulse-width modulator.

The transfer unit 23 of the switch-mode power supply 11 then starts operating, and a voltage is induced in the auxiliary winding 27. The auxiliary winding 27 increases the voltage in the power-supply circuit 28, and the voltage rises to a switch-off level at the output contact 36 of the linear voltage-regulator 13. The turn-off level is at 18 VDC. The linear voltage-regulator 13 switches off, and the power-supply circuit 28 feeds the pulse-width modulator instead of the start-up circuit 10. The Zener diodes 18, 20 that are connected in series between the control contact 17 of the switchable device 15 and the ground connection 19 each have a blocking voltage level of 200 VDC. Thus, the pair of Zener diodes 18, 20 has a blocking voltage level of twice the blocking voltage level of a single Zener diode 18, 20, i.e. 400 VDC. When the feed-in voltage increases further and reaches a value above the blocking voltage level of the pair of Zener diodes 18, 20, the Zener diodes 18, 20 open, whereby a current runs through a bypass including the output contact 16 of the switchable device 15, the resistor 21, and the Zener diodes 18, 20. A voltage level at the gate of the switchable device 15 drops below a threshold value of the switchable device 15. As a consequence the switchable device 15 at least partially blocks the current between drain and source. The input voltage of the linear voltage-regulator 13 does not rise above 400 VDC. The voltage at the output contact 16 drops to a level of about 3.5 VDC. The resistor 21 limits a current running in the bypass to about 3.5 µA.

## Claims

1. A start-up circuit for providing a supply voltage for a pulse-width modulator of a switch-mode power supply, comprising a feed-in node (12) provided to be electrically connected with an external power source, comprising a linear voltage-regulator (13) for converting an input voltage into a supply voltage of the pulse-width modulator,
**characterised by**
a switching unit (14) arranged between the feed-in node (12) and the linear voltage-regulator (13), the switching unit (14) being provided to define a maximum input voltage applied to the linear voltage-regulator (13).

2. The start-up circuit according to claim 1,
**characterised in that**
the switching unit (14) comprises an actively switchable device (15) comprising an output contact (16) and a control contact (17).

3. The start-up circuit according to claim 2,
**characterised in that**
the switching unit (14) comprises at least one Zener diode (18) electrically connected to the control contact (17), the Zener diode (18) being provided to trigger the switchable device (15).

4. The start-up circuit according to claim 3,
**characterised in that**
the switching unit (14) comprises a ground connection (19) which the Zener diode (18) is electrically connected to.

5. The start-up circuit according to claim 4,
**characterised in that**
the switching unit (14) comprises at least one further Zener diode (20) connecting the ground connection (19) to the Zener diode (18) which is electrically connected to the control contact (17).

6. The start-up circuit according at least to claim 2,
**characterised in that**
the switchable device (15) is implemented as a depletion-mode field effect transistor.

7. The start-up circuit according at least to claim 3,
**characterised in that**
the switching unit (14) comprises a resistor (21) connecting the output contact (16) of the switchable device (15) to the Zener diode (18) electrically connected to the control contact (17), the resistor (21) being provided to limit a current through the Zener diode (18).

8. The start-up circuit according to any one of the preceding claims,
**characterised in that**
the maximum input voltage applied to the linear voltage-regulator (13) is below 480 VDC.

9. The start-up circuit according to any one of the preceding claims,
**characterised by**
an additional Zener diode (22) provided to define a minimum input voltage applied to the linear voltage-regulator (13).

10. The start-up circuit according to any one of the preceding claims,
**characterised in that**
the feed-in (12) node is provided to be electrically connected to a solar power panel.

11. A flyback converter having a start-up circuit according to any one of the preceding claims.
